# EUROPÄISCHE PATENTANMELDUNG

(11) **EP 1 571 590 A1**
(43) Veröffentlichungstag der Anmeldung: **07.09.2005**
(21) Anmeldenummer: 04100864.0
(22) Anmeldetag: 03.03.2004
(51) Int. Cl.: G06K 19/07, H04M 17/00, G06F 17/30, G06F 17/60

(54) **Bestellverfahren für Mobilfunknetzteilnehmer**

(71) Anmelder: Swisscom Mobile AG, 3050 Bern (CH)
(72) Erfinder: Lauper, Eric, 3014 Bern (CH)
(74) Vertreter: P&TS Patents & Technology Surveys SA

(57) **Zusammenfassung**

Verfahren, um Mobilteilnehmern Dienstleistungen zur Verfügung zu stellen, mit folgenden Verfahrenschritten:
der Mobilteilnehmer lässt einen in einem RFID-Element (10) gespeicherten elektronische Code (100) mit einem RFID-Lesegerät (2) einlesen,
der benannte elektronische Code (100) wird über ein Telekommunikationsnetz (4) an einen Server (5) übertragen,
der benannte Server (5) sendet eine Anfrage an einen Namen-Dienstserver (6), in welchem Verknüpfungen zwischen mehreren elektronischen Codes (100) und mehreren elektronischen Adressen registriert sind,
der benannte Namen-Dienstserver (6) sendet die Adresse der Seite, die dem benannten Code entspricht, an den benannten Server (5),
der benannte Server (5) greift auf die benannte Seite zu,
die bestellte Dienstleistung wird dem Mobilteilnehmer zur Verfügung gestellt.

## Beschreibung

Die vorliegende Erfindung betrifft ein Verfahren, mit welchem einem Mobilteilnehmer Dienstleistungen zur Verfügung gestellt werden, beispielsweise ein Verfahren, mit welchem der Netzbetreiber eines Mobilfunknetzes einem Mobilteilnehmer Dienstleistungen zur Verfügung stellt.

Im Patent EP0827119 wird ein Verfahren zum Aufladen einer SIM-Karte mit einem Geldbetragswert beschrieben, in welchem eine vorauszahlbare Wertkarte für einen bestimmten Geldbetrag käuflich erworben wird. Bei der Wertkarte wird vom Besitzer der Karte ein Feld freigelegt, das mit einer undurchsichtigen ablösbaren Schicht abgedeckt ist, wodurch ein Code sichtbar wird. Der Mobilteilnehmer ruft dann eine Dienstnummer an, wodurch er mit einer Datenbank verbunden wird, in welcher sämtliche an Wertkarten vergebenen Codes und der dem Code jeweils zugeordnete Geldbetrag gespeichert sind. Der Anrufer wird aufgefordert, den freigelegten Code mit dem anrufenden Kommunikationsgerät einzugeben. Wird der eingegebene Code in der Datenbank gefunden, wird eine Kurzmeldung mit dem aufzuladenden Geldbetragswert vorbereitet. Der Geldbetragswert und der Code werden in der Datenbank als gebraucht markiert oder gelöscht, und das nächste Mal, wenn die SIM-Karte in irgend einem der Kommunikationsgeräte steckt und eine Verbindung mit dem Kommunikationsnetz aufgebaut wird, wird die aufzuladende SIM-Karte mit dem zwischengespeicherten Geldbetragswert mittels der vorbereiteten Kurzmeldung aufgeladen.

Obwohl sehr erfolgreich, weist dieses Verfahren mehrere Nachteile auf. Zum einen ist die Herstellung von Wertkarten mit einem abgedeckten Code teuer. Zum anderen ist das manuelle Eingeben des Codes mit dem Mobilgerät mühsam und sehr fehleranfällig. Dies ist insbesondere der Fall, wenn der Code lang ist; die optimale Länge des Codes ist somit ein Kompromiss zwischen dem Bedürfnis nach Bequemlichkeit und der Notwendigkeit, aus Sicherheitsgründen genügend Codes unbenutzt zu lassen, damit Mobilteilnehmer kaum eine Möglichkeit haben, richtige Codes durch Versuche zu erraten. Es können ausserdem praktisch nur numerische, eventuell alphanumerische Codes, eingegeben werden, damit sie mit der eingeschränkten Tastatur eines Mobilgeräts mit möglichst geringem Aufwand eingegeben werden können. Numerische und alphanumerische Codes verwenden jedoch nur einen kleinen Teil der möglichen Kombinationen, die mit der entsprechenden Anzahl von Bits in den Codes möglich wären. Da Wertkarten manchmal lange im Lager oder in Geschäften verbleiben, ist die Anzahl von Nachladungen, die mit einem Set von Wertkarten mit einer zumutbaren Codelänge möglich ist, eingeschränkt. Dieses Verfahren kann daher in der Praxis nur für einen bestimmten Dienst, nämlich für die Aufladung von SIM-Karten, verwendet werden.

Dieses Verfahren hat ausserdem den Nachteil, dass die Codes vom Betreiber des Mobilfunknetzes verteilt werden und somit Mobilfunknetzabhängig sind. Es müssen also für unterschiedliche Netze unterschiedliche Wertkarten verwendet werden. Die Programmierung von neuen Dienstleistungen muss für jedes Netz und verwendetes Codesystem neu gemacht werden.

Die Sicherheit dieses Verfahren basiert vor allem auf dem Verstecken der einzugegebenen Codes. Sobald dieser Code freigelegt wird, kann er manuell einfach kopiert werden.

Es sind andere Verfahren bekannt, mit welchen Dienstleistungen durch Lesen und Übertragung eines Barcodes mit einem Barcodeleser bestellt werden können. Barcodes können jedoch nicht beliebig lang sein; längere Barcodes verlangen nämlich gute, stabile Barcodeleser, die kaum in portablen Geräten eingebaut werden können. Ausserdem müssen Barcodes in einer Weise auf die Wertkarten gedruckt werden, dass sie bis zum Kauf versteckt bleiben, damit kein Dritter sie verwenden kann. Barcodes können beispielsweise mit einem Kopiergerät leicht dupliziert werden, was die Fälschungsmöglichkeiten erhöht.

Bekannte Verfahren zur Bestellung von Dienstleistungen haben ausserdem den Nachteil, dass eine Bestellungs-Meldung mit dem Bestellungscode stets an eine vordefinierte Adresse (zum Beispiel an eine vordefinierte Telefonnummer) geschickt werden kann. Diese Nummer muss entweder dem Mobilteilnehmer bekannt sein oder auf die Wertkarte gedruckt werden, was die Lesbarkeit der Karte noch erschwert. Wird die Bestellung beispielsweise über SMS geschickt, muss die Zieladresse ebenfalls eingeben werden. Dienstleistungen von verschiedenen Dienstleistungsanbietern müssen in der Regel über unterschiedliche Adressen bestellt werden. Wird die Rufnummer oder elektronische Adresse eines Dienstleistungsanbieters geändert, sind die entsprechenden Dienstleistungen für die meisten Konsumenten nicht mehr bestellbar und die Wertkarten somit unbrauchbar.

Es ist ein Ziel der vorliegenden Erfindung, ein neues Verfahren anzubieten, um Mobilteilnehmern Dienstleistungen zur Verfügung zu stellen.

Es ist ein anderes Ziel der vorliegenden Erfindung, ein neues Verfahren anzubieten, mit welchem Mobilteilnehmer Dienstleistungen mit einem Code bestellen können, wobei die Länge des Codes fast beliebig lang sein kann, ohne dass dadurch das Bestellverfahren unzumutbar lang wird.

Es ist ein anderes Ziel der Erfindung, ein neues Verfahren anzubieten, um Mobilteilnehmern Dienstleistungen zur Verfügung zu stellen, in welchem eingegebene Codes nicht (oder nur schwer) manuell kopiert werden.

Es ist ein anderes Ziel der vorliegenden Erfindung, ein neues Verfahren anzubieten, mit welchem es möglich ist, dass Mobilteilnehmer Dienstleistungen von unterschiedlichen Anbietern über eine gemeinsame vorbestimmte elektronische Adresse bestellen können.

Diese Ziele werden insbesondere durch ein Verfahren erreicht, mit welchem Mobilteilnehmern Dienstleistungen zur Verfügung gestellt werden, welches folgende Verfahrenschritte aufweist:
ein in einem RFID-Element gespeicherter elektronischer Code wird mit einem RFID-Lesegerät gelesen,
der benannte elektronische Code wird über ein Telekommunikationsnetz an einen Server übertragen,
der benannte Server sendet eine Anfrage an einen Namen-Dienstserver, in welchem Verknüpfungen zwischen mehreren elektronischen Codes und mehreren elektronischen Adressen registriert sind,
der benannte Namen-Dienstserver sendet die elektronische Adresse einer Seite, die dem benannten Code entspricht, an den benannten Server,
der benannte Server greift auf die benannte Seite zu,
die bestellte Dienstleistung wird beispielsweise dem Mobilteilnehmer zur Verfügung gestellt.

Dies hat den Vorteil, dass der Code, der der gewünschten Dienstleistung entspricht, nicht manuell eingegeben wird, sondern mit einem RFID-Lesegerät aus einem RFID gelesen werden muss.

Dies hat auch den Vorteil, dass die gewünschte Dienstleistung über eine elektronische Seite bereitgestellt wird. Dies hat den Vorteil, dass Parameter und Bedingungen der Dienstleistung auf einer jederzeit editierbaren Seite definiert sind.

Die Adresse der Seite entspricht dem im RFID-Tag gelesenen Code. Die Verknüpfung zwischen dem Code und der elektronische Adresse der Seite ist nicht statisch, sondern wird in einem Namen-Dienstserver registriert. Dies hat den Vorteil, dass Änderungen der Seitenadresse jederzeit möglich und leicht verfolgbar sind. Dies hat auch den Vorteil, dass es sich um ein universelles System handelt, in welchem Dienstleistungen aus jedem Mobilgerät in jedem Netz über eine einzige Adresse des Servers bestellt werden können.

Dieses Verfahren ermöglicht einem Mobilteilnehmer den Beweis, dass er einen bestimmten Code "physisch" besitzt. Die blosse Kenntnis des Codes genügt nicht; der Code muss aus einem Tag mit einem RFID-Lesegerät gelesen werden. Da Tags schwer kopierbar sind, ist die Sicherheit höher als mit gedruckten numerische Codes oder Barcodes, die einfacher zu duplizieren sind.

Die vorliegende Erfindung wird im Folgenden anhand der Figuren näher beschrieben. Es zeigen

Fig. 1 ein Blockschaltbild eines Systems mit einem Mobilgerät, einem RFID-Lesegerät und einem RFID.

Fig. 2 die Struktur einer Meldung mit einem Code gemäss der Erfindung.

Fig. 3 ein Blockschema eines erfindungsgemässen Systems, in welchem ein Server, ein Dienstleistungsserver, ein Seitenserver und ein Namenserver vorgesehen sind.

Fig. 4 ein Blockschema eines erfindungsgemässen Systems, in welchem ein Server, ein Dienstleistungsserver und ein Namenserver vorgesehen sind.

Fig. 5 ein Blockschema eines erfindungsgemässen Systems, in welchem die gewünschte Dienstleistung über ein separates Terminal bestellt wird.

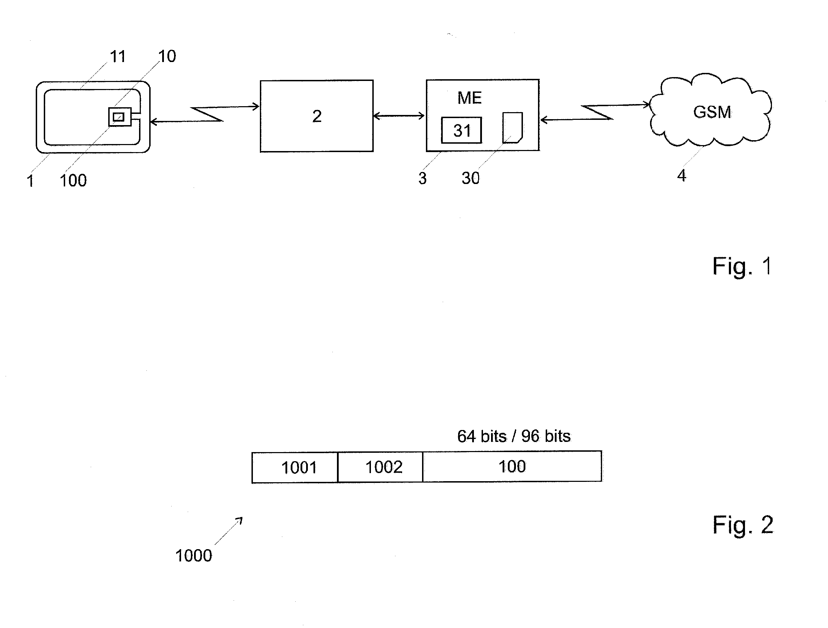

Die Figur 1 zeigt das System, das vom Verbraucher oder Mobilteilnehmer verwendet wird, um mit dem erfindungsgemässen Verfahren Dienstleistungen zu bestellen. Ein Mobilgerät 3 (zum Beispiel ein Mobilfunktelefon oder ein PDA mit einer Schnittstelle für ein zellulares Mobilfunknetz) kann Kurzmeldungen (zum Beispiel SMS und USSD) und Daten (zum Beispiel IP-Pakete) aus einem Mobilfunknetz 4 empfangen und an dieses Netz senden. Das Mobilfunknetz 4 ist beispielsweise ein GSM, GPRS, HSCSD, EDGE, UMTS oder CDMA-Netz, über welches auch Daten übermittelt werden können. Das Mobilgerät 3 enthält ein Identifizierungsmodul (zum Beispiel eine SIM-Karte 30) um das Gerät durch das Netz 4 zu identifizieren. Eine oder mehrere Software-Anwendungen 31 können von einem Prozessor im Mobilgerät 3 ausgeführt werden.

Das Mobilgerät 3 umfasst ausserdem einen RFID-Leseteil 2, oder ist mit einem solchen Leseteil verbunden (beispielsweise über eine USB, Firewire, PCCard, Compactflash, proprietäre, usw, Verbindung, oder über eine Bluetooth oder WLAN-kontaktlose Verbindung). Das Leseteil 2 umfasst einen Mikrokontroller und mindestens eine Antenne oder Spule, um kontaktlos Daten mit RFID-Komponenten in der unmittelbaren Nähe auszutauschen. Die Datenübertragung erfolgt vorzugsweise im Frequenzbereich 13,56MHz, 900MHz und/oder 860-930MHz. Der Leseteil kann vorzugsweise wahlweise in verschiedenen Frequenzbereichen und mit unterschiedlichen RFIDs arbeiten. Die Tragweite beim Lesen der RFIDs beträgt vorzugsweise zwischen 2 und 10 Metern - je nach Orientierung des Leseteils und des Tags. Die Verbindung erfolgt vorzugsweise im Half-Duplex Modus mit einer ASK Backscatter Modulation.

Das Tag 1 als Wertkarte umfasst ein Chip 10 mit einem unlöschbaren permanenten Speicherbereich, in welchem während der Herstellung oder während der Personalisierung des Tags ein Code 100 abgelegt wird. Der Code identifiziert eindeutig jedes bestimmte Tag 1; jedes Tag hat vorzugsweise einen anderen Code. Der Code ist vorzugsweise unfälschbar. Der Code-Herausgeber (beispielsweise ein Netzbetreiber) führt eine Tabelle, auf welcher die gültigen, verbrauchten oder verfallenen Codes als solche markiert sind.

Die Codes 100 umfassen vorzugsweise 64, 96 oder mehr Bits und sind hierarchisch organisiert. Die Antwort 1000 des Tags 10 an eine Anfrage des Leseteils 2 umfasst vorzugsweise einen Vorsatz 1001, Redundante Prüfdaten 1002 und erst dann den Code 100 (Fig. 2). Andere Daten können im Speicherbereich des Chips 10 abgelegt und vom Leseteil gelesen werden.

Codes 100 werden vorzugsweise von einer gemeinsamen Autorität an verschiedene Produkthersteller, Mobilfunknetzanbieter und Mehrwertdienstanbieter verteilt; ein Teil des Codes gibt vorzugsweise die Identität des Anbieters des mit dem Wertkarte 1 erworbenen Dienstes an (zum Beispiel die Identität des Mobilfunknetzbetreibers). Ein Dienstanbieter, der Dienstleistungen an Mobilteilnehmer mittels Wertkarten 1 zur Verfügung stellen will, reserviert eine Reihe von Codes bei der gemeinsamen Autorität und speichert einen Teil dieser Codes in Wertkarten 1, die dann verkauft werden. Wie bereits erwähnt, wird eine Liste von gültigen und verbrauchten Codes vom Dienstanbieter verwaltet; der entsprechende Betrag der Wertkarte kann je nach Anwendung ebenfalls auf dieser Liste registriert werden. In einer anderen Ausführungsform kann dieser Betrag eindeutig aus dem Code ermittelt werden.

Mindestens eine Anwendung 31 ist im Mobilgerät 3 vorgesehen, um Codes 100 in benachbarten Tags über das Leseteil 2 zu lesen und um diesen Code über das Mobilfunknetz 4 zu senden. Das Lesen eines Codes wird vorzugsweise vom Mobilgerät 3 initiiert; möglich ist beispielsweise, dass das Mobilgerät stets oder periodisch nach benachbarten Tags sucht und Codes in gefundenen Tags liest und bearbeitet oder weiterleitet. In einer anderen, stromsparenden Variante wird das Lesen vom Benutzer des Mobilgeräts 3 initiiert, der eine entsprechende Anwendung 31 startet oder einen Befehl eingibt, wenn er ein Tag lesen will. Das Lesen der Tags mit dem Mobilgerät 3 oder mit einem anderen Gerät kann auch von einer externen Vorrichtung (zum Beispiel einer Verkaufstelle oder einem Automat) über eine Schnittstelle im Nahbereich (zum Beispiel Bluetooth oder WLAN) über das Mobilfunknetz 4, oder über ein Link auf einer besuchten WEB oder WAP-Seite initiiert werden.

Einfache Filter und Bearbeitungsmittel können als Teil der Anwendung 31 im Mobilgerät 3 und/oder im Leseteil 2 vorgesehen werden, um gelesene Codes 100 zu bearbeiten. Die Anwendung kann beispielsweise nur gewisse Bereiche von Codes bearbeiten und weiterleiten. Redundanzprüfungen können auch vorgesehen werden, um nicht plausible und fehlerbehaftete Codes zu löschen. Bereits verwendete Codes werden vorzugsweise in einer Datenbank im Mobilgerät zwecks zukünftiger Kontrolle, statistischen Bewertungen und Backups gespeichert.

Je nach Anwendung kann auch ein Passwort oder eine andere Authentifikation verlangt werden, bevor der Code gelesen oder weitergeleitet wird. Das Passwort kann beispielsweise auf einen versteckten, freilegbaren Teil der Wertkarte gedruckt werden, oder es wird dem Mobilteilnehmer über einen anderen Kanal mitgeteilt. Mit der Passwortprüfung kann beispielsweise verhindert werden, dass ein unbefugter Dritter mit einem passenden Lesegerät Codes in fremden Wertkarten liest und verwendet.

In einer Ausführungsform besteht das Passwort aus einem Teil des Codes 100, oder kann mit einer Funktion aus diesem Code ermittelt werden. Das Passwort kann sich beispielsweise aus einer mit einem öffentlichen Schlüssel prüfbaren Signatur des Codes ergeben. In diesem Fall kann das Passwort aus dem Code nur dann ermittelt werden, wenn der unbefugte Dritte die entsprechende Funktion oder den privaten Signierungsschlüssel kennt. Diese Ausführungsform hat den Vorteil, dass die Anwendung 31 die Gültigkeit des Passwortes alleine anhand des Codes prüfen kann.

In einer anderen Variante wird die Gültigkeit des Passworts anhand einer Tabelle in der SIM-Karte 30, im Mobilgerät 3 oder im fremden Server geprüft.

In noch einer weiteren Variante wird das Passwort im Tag 10 gespeichert und vom Tag geprüft. Diese Variante erfordert jedoch teure Tags, die auch Passwörter speichern, empfangen und vergleichen können.

Die Anwendung 31 kann eine Bestätigung des Mobilteilnehmers verlangen, bevor der Code weiterbehandelt wird und die gewünschte Dienstleistung bestellt wird. Diese Bestätigung kann beispielsweise über die Tastatur des Mobilgeräts, PDAs, über andere Eingabemittel oder mit einem Sprachbefehl gegeben werden.

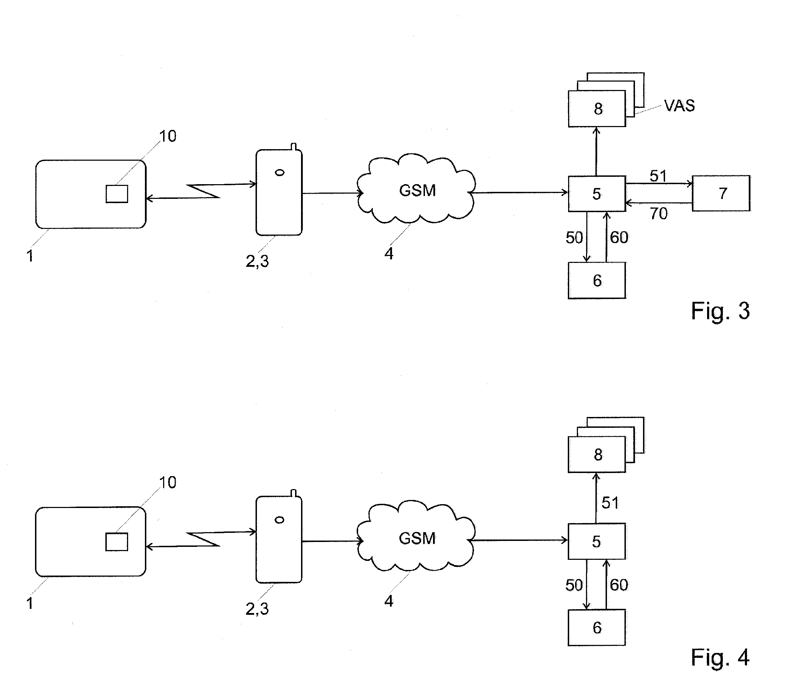

Ist das Passwort korrekt und wird die Bestätigung erhalten, wird der gelesene Code 100 von der Anwendung 31 in einer Dienstleistungs-Bestellmeldung (zum Beispiel in einer Kurzmeldung oder vorzugsweise in einem GPRS- oder UMTS-Paket) verpackt und über das Mobilfunknetz 4 an einen Server 5 an eine bekannte Adresse gesendet, vorzugsweise einen Server innerhalb der Infrastruktur des Mobilfunknetzes 4 (Figur 3). Die Dienstleistungs-Bestellmeldung wird optional vom Mobilgerät 3 oder von der SIM-Karte 30 signiert und/oder mit einem Zeitstempel versehen.

Der Server 5 verwaltet Dienstleistungs-Bestellmeldungen mit Codes, die von mehreren oder möglicherweise allen RFID-Lesern 2,3 empfangen werden. Andere, komplexere Filter können im Server 5 vorgesehen werden, um Codes aus unterschiedlichen Bereichen verschieden oder gar nicht zu behandeln.

Ein Passwort kann auch vom Server 5 verlangt werden, damit der Code überhaupt behandelt wird; dieses Passwort kann ähnlich wie im Mobilgerät aus dem Code selbst abgeleitet oder anhand einer Tabelle geprüft werden. Das Passwort wird beispielsweise zusammen mit dem Code 100 in einer Meldung an den Server 5 übertragen.

Der Server 5 kann auch die Identität des Mobilteilnehmers prüfen. Dies ist umso zuverlässiger, wenn der Server 5 vom Betreiber des Mobilfunknetzes 5 verwaltet wird. In diesem Fall kann die Identität des Mobilteilnehmers beispielsweise anhand der IMSI (International Mobile Subscriber Identity) oder einer anderen Identität in der SIM-Karte zuverlässig ermittelt werden. Gewisse Dienstleistungen werden nur gewissen Mobilteilnehmern zur Verfügung gestellt (beispielsweise Mobilteilnehmer, die über ein entsprechendes Abonnement verfügen, die einen genügenden Saldo auf einem Geldkonto vorweisen, oder deren Profil die Bereitstellung der Dienstleistung erlaubt).

Falls das Passwort falsch ist, oder wenn die gewünschte Dienstleistung aus einem anderen Grund nicht bereitgestellt werden kann, wird vorzugsweise eine Meldung an den Mobilteilnehmer geschickt (beispielsweise über SMS, USSD, oder Internet). Nach mehreren Fehlversuchen können aus Sicherheitsgründen weitere Versuche definitiv oder temporär gesperrt werden. Auf diese Weise kann verhindert werden, dass gültige Codes durch mehrmalige Versuche erraten werden.

Der Server 5 ist über Internet oder ein Intranet mit einem Namendienstserver 6 verbunden, in welchem für jeden Code eine entsprechende elektronische Adresse einer elektronischen Seite abgelegt ist.

Eine Anfrage 50 mit dem gerade empfangenen Code 100 wird vom Server 5 an den Namendienstserver 6 geleitet, der mit der entsprechenden elektronischen Adresse 60 antwortet. Die elektronische Adresse besteht beispielsweise aus einem URL oder einer anderen Adresse für ein TCP-IP Netz.

Der Namendienstserver 6 kann vom Betreiber des Servers 5 verwaltet werden und/oder von externen Entitäten (beispielsweise von der Organisation, die die Codes 100 an die verschiedenen Firmen verteilt). Mehrere Namendienstserver können miteinander verbunden werden, so dass die gewünschte Adresse in einem anderen Namendienstserver gesucht wird, wenn sie sich nicht im Server 6 befindet. Dies erlaubt zum Beispiel einem Mobilfunknetzbetreiber, auch Codes von anderen Organisationen zu bearbeiten. Ein lokaler Cache 6 eines externen Namendienstes kann auch im Server 5 oder im Domain des Servers 5 vorgesehen werden; dieser Cache kann beispielsweise nur die Adressen enthalten, die den Codes entsprechen, die sich in Wertkarten des Mobilfunknetzbetreibers befinden.

Der Benutzer des Mobilgeräts 1 kann somit alle Codes 100 von allen Dienstleistungsanbietern stets an den gleichen Zielserver 5, der aus dem Namendienstserver 6 oder dem Netz von Namendienstservern 6 die Adresse der Seite, anhand welcher die gewünschte Dienstleistung bereitgestellt wird, ermittelt. Die Behandlung der Dienstleistungs-Bestellmeldung ist somit nur vom Code in der Meldung abhängig. Gleiche Meldungen, die an unterschiedliche Server 5 mehrerer Dienstleistungsanbieter gelangen, können somit genau die Bereitstellung der gleichen Dienstleistung verursachen.

Die Verknüpfung im Namendienstserver 6 zwischen einem Code 100 und einer Adresse kann vorzugsweise vom Anbieter der gewünschten Dienstleistung jederzeit geändert werden (beispielsweise über ein dediziertes WEB-Formular). Dies erlaubt, die elektronische Adresse einer Seite oder eines Domains zu ändern, ohne die Endbenutzer informieren zu müssen.

Die Adresse der gewünschten Seite kann somit eindeutig allein anhand der 64- oder 96-Bits-Codes, die im Tag 1 gespeichert sind, gefunden werden; die Seite, auf welche zugegriffen wird, ist somit völlig unabhängig von der Adresse oder Telefonnummer des Servers 5. Da viele Produkte und Wertkarten markiert werden müssen, und da aus Sicherheitsgründen nicht alle Codes verwendet werden können, müssen genügend frei verfügbare Bits für die Codes vorgesehen werden, einfache IP-Nummern zum Beispiel, würden möglicherweise nicht ausreichen, da sehr viele mögliche Kombinationen bereits zugeteilt worden sind. Es wird vorzugsweise ein anderes, selbständiges Seiten-Adressierungssystem verwendet.

Der Server 5 empfängt die Antwort 60 vom Namendienstserver 6 mit der gewünschten Seitenadresse und greift auf die entsprechende Seite im Server 7 zu, oder auf ein Netz mit mehreren lokalen oder fernen Servern (Anfrage 51 und Antwort 70 auf Figur 3).

In einer Variante ergibt sich die Adresse der gewünschten Seite aus einer Kombination der vom Namendienstserver 6 angegebenen Adresse mit einem oder mehreren Bits des Codes 100. In diesem Fall entspricht die Adresse im Namendienstserver 6 einem Bereich, in welchem die individuellen Seiten bestimmten Teilen der Codes entsprechen. Dies hat den Vorteil, dass der Namendienstserver einfacher gestaltet werden kann.

Die Seite im Server 7, auf welche der Server 5 zugreift, umfasst möglicherweise einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Marking Language). Die Seite kann auch SOAP-Protokol (Simple Object Access Protocol) .NET- Framework oder andere Web-Dienste unterstützen, mit welchen der Server 5 und schlussendlich das Mobilgerät 3 auf Dienste und Objekte des Servers 7 zugreifen kann. In diesem Fall umfasst das erfindungsgemässe Verfahren die Bereitstellung von ausführbaren Programm-Codeelementen oder SOAP- und/oder .NET-Diensten.

Der Server 5 lädt die gewünschte Seite aus dem Server 7 fern, und/oder greift auf den gewünschten Dienst (oder das Objekt an der angegebenen Adresse) zu, um die gewünschte Dienstleistung bereitzustellen. In der Ausführungsform der Figur 3 wird diese Dienstleistung über einen Dienstleistungsserver 8 bereitgestellt, an welchen die vom Server 7 gewonnenen Parameter geleitet werden, sowie möglicherweise Parameter des Mobilfunknetzes übermittelt werden.

In einer Variante besteht der Dienstleistungsserver 8 aus einem Prepaid-Server in der Infrastruktur des Mobilfunknetzes 4. Die Wertkarte 1 wird in diesem Fall für einen Betrag käuflich erworben, der auf das vorbezahlte Geldkonto des Mobilteilnehmers im Server 8 und/oder in seiner SIM-Karte 30 geladen wird. Dieses Geldkonto wird belastet, wenn der Mobilteilnehmer beispielsweise Sprach- oder Datenverbindungen durch das Mobilfunknetz 4 oder in einem kontaktlosen lokalen Netz (zum Beispiel WLAN) aufbaut. Die Dienstleistung kann auch die Änderung von anderen mobilteilnehmer-spezifischen Parametern im Mobilfunknetz umfassen.

In einer anderen Variante werden Informationen (zum Beispiel WEB- oder WAP-Seiten, Text-, Fotos, Musik oder Video-Dokumente, Software-Programme, ausführbare Programmcodeelemente, usw.) aus der Seite 7 oder aus dem Dienstleistungsserver in das Mobilgerät 3 ferngeladen. Auf diese Weise können mit der Wertkarte 1 Inhalte erworben werden.

In noch einer anderen Variante wird ein elektronischer Schlüssel an das Mobilgerät 3 und/oder an die SIM-Karte 30 gesendet und gespeichert. Das Tag dient in diesem Fall als persönlicher Inhaberausweis; es kann mit dem erfindungsgemässen Verfahren gegen einen elektronischen Schlüssel getauscht werden, der vom Mobilgerät 3 für den Zugriff auf geschützte Orte oder Geräte verwendbar ist. Dieser Schlüssel kann beispielsweise in einem lokalen Netz verwendet werden, um die Identität des Benutzers des Mobilgeräts zu beweisen.

In noch einer anderen Variante umfasst das Verfahren die Bereitstellung (beispielsweise die Übertragung) von Konfigurationsparametern eines Geräts an das Mobilgerät 3. Auf diese Weise können beispielsweise das Mobilgerät 3 oder ein anderes mit dem Mobilgerät 3 verbundene Gerät neu programmiert oder konfiguriert werden.

Nachdem die bestellte Dienstleistung bereitgestellt wurde, wird eine entsprechende Änderung im Server 5 und/oder im Dienstleistungsserver 8 eingetragen, damit das gleiche Tag 1 nicht mehrmals verwendet wird. In einer Variante wird auch die Seite 7 entsprechend geändert, indem beispielsweise die Bereitstellung der Dienstleistung registriert wird. Der verwendete Code wird auch vorzugsweise im Namendienstserver 6 und/oder im Server 5 als verbraucht markiert.

Die gewünschte Dienstleistung kann von innerhalb des Mobilfunknetzes 4 ermittelten Parametern, einschliesslich von der Identität des Benutzers des Mobilgeräts 3, von seinem Vertragstyp, von seinem Standort, von der Zeit, vom besuchten Netz, von seiner Solvabilität und seinem Profil, usw. abhängig sein. Es werden möglicherweise mindestens gewisse von diesen Parametern im Server geprüft, bevor die gewünschte Dienstleistung überhaupt bereitgestellt wird. Es kann beispielsweise geprüft werden, ob eine bestimmte Wertkarte 1 mit einem Verfallsdatum immer noch gültig ist, ob die gewünschte Dienstleistung mit dem Vertragstyp des Mobilteilnehmers und/oder mit dem Typ des verwendeten Mobilgeräts kompatibel ist, usw. Die Sprache des ermittelten Inhalts kann vom Standort des Mobilteilnehmers und/oder von seinem Profil abhängig sein.

Die gewünschte Dienstleistung kann über einen Rückkanal (beispielsweise über SMS, USSD, WAP oder sonstige IP-Pakete) an das Mobilgerät 3 und/oder an die SIM-Karte 30 geliefert werden. Gewisse Dienstleistungen, einschliesslich Produktbestellungen und viele Zahlungstransaktionen, erfordern keine Übertragung von Daten an das Mobilgerät. Es wird jedoch vorzugsweise mindestens eine Bestätigung an das Mobilgerät 3 gesendet, wobei die Bestätigung über einen anderen Kanal als die Dienstleistung übermittelt werden kann. Es ist zum Beispiel möglich, dass die Dienstleistung die Übertragung von Daten an das Mobilgerät über einen schnellen Datenkanal umfasst, während die Bestellung mit einer Kurztextmeldung oder gar über den Sprachkanal bestätigt wird.

Die vom Server 5 gesendete Bestätigung kann vorzugsweise mindestens ein Teil des Inhalts der Seite auf die zugegriffen wurde und/oder einen Link zu dieser Seite umfassen.

Die Figur 4 zeigt eine weitere Ausführungsform, in welcher die gewünschte Seite, die der Adresse des gesendeten Codes entspricht, im Dienstleistungsserver 8 abgelegt wird.

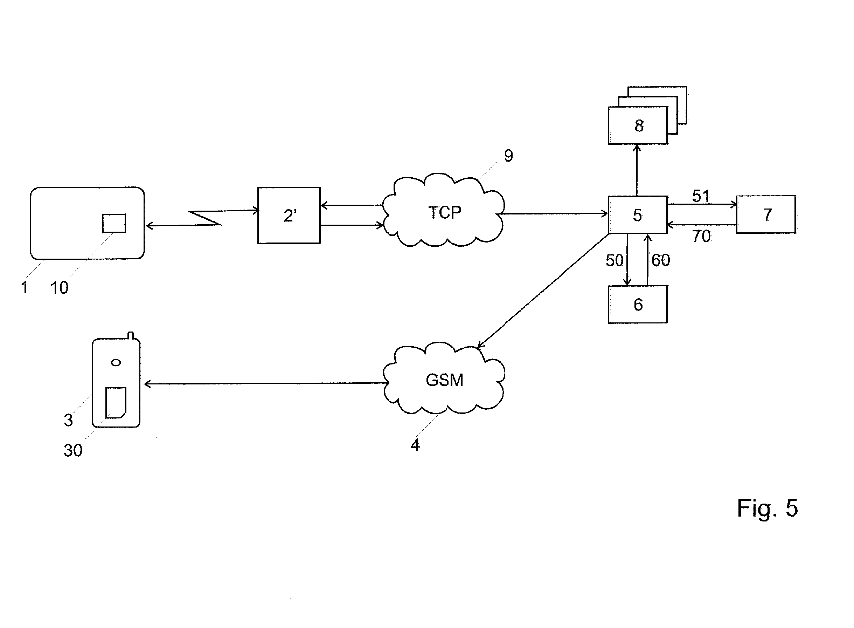

Die Figur 5 zeigt eine Ausführungsform, in welcher das RFID-Lesegerät, mit welchem das Tag 1 gelesen wird, nicht mit dem Mobilgerät 3 verbunden ist. In diesem Fall wird der Code 100 von einem externen RFID-Lesegerät 2' (zum Beispiel ein mit einem nicht dargestellten Verkaufsautomat, einer Geschäftskasse, einem Rechner oder einem zweiten Mobilgerät verbundenen Lesegerät 2') gelesen. Die Code 100 wird dann über ein Telekommunikationsnetz 9 (zum Beispiel über ein VPN durch Internet) an den Server 5 gesendet, welcher die entsprechende Seitenadresse aus dem Namendienstserver 6 holt, auf diese Seite im Seitenserver 7 zugreift und die gewünschte Dienstleistung anhand des Dienstleistungsservers 8 dem Mobilteilnehmer zur Verfügung stellt. Die Bereitstellung der Dienstleistung kann die Übermittlung von Daten, Inhalte oder Programme an das Mobilgerät 3 über das Mobilfunknetz 4 umfassen.

Diese Erfindung erlaubt somit, RFID's mit Codes als elektronische Token für Dienstleistungen, die mittels elektronischer Seiten zur Verfügung werden, wobei der Inhalt der Seite und deren Adresse nach der Verteilung der Tags geändert werden kann.

## Patentansprüche

1. Verfahren, um Mobilteilnehmern Dienstleistungen zur Verfügung zu stellen, mit folgenden Verfahrenschritten:
der Mobilteilnehmer lässt einen in einem RFID-Element (10) gespeicherten elektronischen Code (100) mit einem RFID-Lesegerät (2) einlesen,
der benannte elektronische Code (100) wird über ein Telekommunikationsnetz (4) an einen Server (5) übertragen,
der benannte Server (5) sendet eine Anfrage an einen Namen-Dienstserver (6), in welchem Verknüpfungen zwischen mehreren elektronischen Codes (100) und mehreren elektronischen Adressen registriert sind,
der benannte Namen-Dienstserver (6) sendet die elektronische Adresse der Seite, die dem benannten Code entspricht, an den benannten Server (5),
der benannte Server (5) greift auf die benannte Seite zu,
die bestellte Dienstleistung wird zur Verfügung gestellt.

2. Das Verfahren des Anspruchs 1, in welchem sich der benannte Server (5) in der Infrastruktur des Telekommunikationsnetzes (4) befindet,
und in welchem sich der benannte Namen-Dienstserver (5) ausserhalb der Infrastur des Telekommunikationsnetzes (4) befindet und für mehrere Netzbetreiber zugänglich ist.

3. Das Verfahren eines der Ansprüche 1 oder 2, in welchem die benannte Seite einen Hypertext-Inhalt in einer Markup Language umfasst.

4. Das Verfahren eines der Ansprüche 1 bis 3, in welchem das benannte RFID-Element (10) von einem Mobilteilnehmer käuflich erworben wird,
und in welchem der benannte elektronische Code in einem Server als verbraucht markiert wird, sobald die benannte Dienstleistung bereitgestellt wurde.

5. Das Verfahren eines der Ansprüche 1 bis 4, in welchem die benannte Dienstleistung eine Gutschrift für einen Zugriff des Mobilteilnehmers auf das benannte Telekommunikationsnetz (4) umfasst.

6. Das Verfahren eines der Ansprüche 1 bis 5, in welchem die benannte Dienstleistung die Bereitstellung von Konfigurationsparametern eines Geräts umfasst.

7. Das Verfahren eines der Ansprüche 1 bis 6, in welchem die benannte Dienstleistung die Änderung von mobilteilnehmer-spezifischen Parametern im Mobilfunknetz (4) umfasst.

8. Das Verfahren eines der Ansprüche 1 bis 7, in welchem die benannte Dienstleistung die Bereitstellung von SOAP- und/oder .NET-Diensten, die dem benannten Server zugänglich, sind, umfasst.

9. Das Verfahren eines der Ansprüche 1 bis 8, in welchem die benannte Dienstleistung die Bereitstellung von ausführbaren Programmcode-Elementen umfasst.

10. Das Verfahren eines der Ansprüche 1 bis 9, in welchem nach der Bereitstellung der Dienstleistung eine Bestätigung an das Mobilgerät gesendet wird,
und in welchem die benannte Bestätigung mindestens einen Teil des Inhalts der benannten Seite und/oder einen Link zu einer benannten Seite umfasst.

11. Das Verfahren eines der Ansprüche 1 bis 10, in welchem das benannte RFID-Lesegerät (2) Teil eines Mobilfunktelefons (3) ist,
und in welchem der benannte Code durch eine Software-Anwendung (31) im benannten Mobilfunktelefon (3) verpackt und an den benannten Server (5) übertragen wird.

12. Das Verfahren eines der Ansprüche 1 bis 11, in welchem die benannten elektronischen Codes hierarchisch organisiert sind,
und in welchem ein Teil des Codes auf die Identität des benannten Mobilfunknetzbetreibers hinweist.

13. Das Verfahren eines der Ansprüche 1 bis 12, in welchem der Mobilteilnehmer ein Passwort eingibt,
und in welchem die benannte Dienstleistung nur bereitgestellt wird, wenn das Passwort dem benannten Code entspricht.

14. Das Verfahren eines der Ansprüche 1 bis 13, in welchem die Identität des Mobilteilnehmers geprüft wird,
und die Bereitstellung der Dienstleistung von dieser Identität abhängig ist.

15. Das Verfahren des Anspruchs 14, in welchem die Identität des Mobilteilnehmers mit einer Chipkarte (30) ermittelt wird.
